Europäisches Patentamt

European Patent Office

Office européen des brevets

(11) Numéro de publication: **0 156 704**

**A1**

(12)

# DEMANDE DE BREVET EUROPEEN

(21) Numéro de dépôt: 85400407.4

(22) Date de dépôt: 04.03.85

(51) Int. Cl.⁴: **G 01 S 5/10**
**G 01 S 1/30**

(30) Priorité: 07.03.84 FR 8403539

(43) Date de publication de la demande:
02.10.85 Bulletin 85/40

(84) Etats contractants désignés:
BE CH DE GB IT LI LU NL SE

(71) Demandeur: **COMMISSARIAT A L'ENERGIE ATOMIQUE
Etablissement de Caractère Scientifique Technique et
Industriel**
**31/33, rue de la Fédération**
**F-75015 Paris(FR)**

(72) Inventeur: **Raoux, Daniel**
**42, rue de la Division Leclerc**
**F-78830 Bonnelles(FR)**

(74) Mandataire: **Mongrédien, André et al,**
**c/o BREVATOME 25, rue de Ponthieu**
**F-75008 Paris(FR)**

(54) Procédé de surveillance des déplacements de véhicules, à partir d'une station centrale.

(57) Le procédé consiste à obtenir les coordnées approximatives de chaque véhicule, à partir de signaux émis par des stations du réseau oméga mondial, grâce à un récepteur embarqué (5). Ces coordonnées approximatives sont corrigées par des moyens de réception et de traitement (3) reliés à des balises fixes (4) de radiogoniométrie. Des moyens de traitement (8), reliés au récepteur embarqué (5), fournissent à un émetteur embarqué (6), les coordonnées réelles du véh- icule, émises sous forme codée, vers un récepteur (7) de la station (1). Une communication phonique bilatérale entre la station et les véhicules peut être effectuée grâce à des moyens (18, 19) de communication. Des alarmes à bord des véhicules peuvent être transmises à la station.

Application à la surveillance de déplacements de véhicules transportant des matières dangereuses ou précieuses.

FIG. 1

EP 0 156 704 A1

# PROCEDE DE SURVEILLANCE DES DEPLACEMENTS DE VEHICULES, A PARTIR D'UNE STATION CENTRALE

La présente invention concerne un procédé de surveillance des déplacements des véhicules, à partir d'une station centrale.

Elle s'applique à la surveillance de déplacements de véhicules transportant des matières dangereuses ou précieuses, sur un territoire même assez vaste.

Ce procédé permet une transmission immédiate et hautement fiable de différentes alarmes survenant à bord de chaque véhicule, notamment d'arrêt, de panne ou en cas de prise à partie de celui-ci par des éléments hostiles. L'invention permet aussi une liaison phonique bilatérale entre le véhicule et la station centrale. A chaque instant le véhicule est localisé avec une grande précision, en latitude et en longitude, et le kilométrage parcouru depuis son point de départ, est indiqué à la station centrale qui peut mémoriser ces données au cours du temps.

On ne connaît pas actuellement de procédé de surveillance des déplacements des véhicules, qui soit très précis. Le procédé le plus connu, mais qui malheureusement n'est pas très performant, consiste à transmettre à une station centrale, l'indicatif du véhicule, le kilométrage parcouru par prélèvement de l'information kilométrique sur la boîte de vitesse du véhicule, ainsi que des alarmes éventuelles à bord du véhicule. Ce procédé ne permet pas de localiser le véhicule avec précision en latitude et en longitude.

L'invention a pour but de remédier à ces inconvénients et notamment de fournir un procédé performant de surveillance des déplacements de véhicules. Selon ce procédé, chaque véhicule en déplacement émet vers une station centrale d'émission-réception et de

B 8081.3 DC

traitement de signaux, un code d'identification du véhicule, le kilométrage parcouru à partir d'une station de départ, des alarmes éventuelles à bord du véhicule, les coordonnées très exactes du véhicule repérées en latitude et en longitude. Ce procédé permet également une liaison phonique bilatérale entre la station centrale et chacun des véhicules sous surveillance.

L'invention a pour objet un procédé de surveillance de déplacements de véhicules à partir d'une station centrale d'émission-réception et de traitement, consistant à repérer les coordonnées réelles de chaque véhicule, en latitude et longitude, ainsi que les instants auxquels chaque véhicule occupe ces coordonnées, ces coordonnées réelles étant obtenues par correction automatique des coordonnées approximatives des véhicules, fournies par des moyens embarqués sur chaque véhicule permettant la réception et le traitement de signaux de repérage émis par des stations du réseau oméga mondial, les moyens d'émission embarqués émettant vers la station centrale, des signaux correspondant aux coordonnées réelles, la correction automatique des coordonnées étant effectuée à partir de signaux de correction fournis par des récepteurs de correction situés à proximité de balises fixes d'émission de radionavigation ayant des coordonnées fixes connues en latitude et longitude, le récepteur de correction à proximité de chaque balise recevant les signaux émis par les stations du réseau oméga mondial et traitant ces signaux pour calculer les différences entre les phases approximatives des signaux reçus du réseau oméga mondial, et les phases réelles de ces signaux, des signaux de correction étant émis sous forme de signaux codés de correction, sur l'onde porteuse émise par la balise, vers les moyens embarqués de réception de chaque véhicule, les moyens embarqués d'émission corres-

B 8081.3 DC

pondants transmettant à la station centrale les coordonnées réelles du véhicule, des moyens de réception et de traitement de la station centrale fournissant les coordonnées réelles de véhicules en fonction du temps, caractérisé en ce que les instants correspondant aux coordonnées des véhicules sont fournis par une horloge émettrice de précision, captée par les moyens embarqués de réception, cette horloge synchronisant les moyens d'émission et de réception embarqués des véhicules, les moyens d'émission embarqués émettant des séquences de signaux présentant pour les différents véhicules, des périodes entrelacées.

Selon une autre caractéristique, le procédé permet, grâce aux moyens d'émission embarqués sur chaque véhicule, d'émettre vers la station centrale des signaux codés indiquant un numéro d'identification du véhicule.

Selon une autre caractéristique, après chaque séquence de signaux pour chaque véhicule est prévue une période de communication bilatérale en phonie entre le véhicule et la station centrale et réciproquement.

Selon une autre caractéristique, ce procédé consiste, grâce aux moyens d'émission embarqués sur chaque véhicule, à émettre vers la station centrale, des signaux codés indiquant des alarmes éventuelles à bord du véhicule.

Selon une autre caractéristique, le procédé permet aussi, grâce aux moyens d'émission embarqués sur chaque véhicule à émettre vers la station centrale, des signaux codés indiquant la distance parcourue par le véhicule depuis son départ.

Les caractéristiques et avantages de l'invention ressortiront mieux de la description qui va

B 8081.3 DC

suivre, donnée en référence aux dessins annexés dans lesquels :

- la figure 1 représente schématiquement un ensemble de moyens d'émission et de réception situés à bord du véhicule, dans la station centrale, ainsi qu'en différents points du territoire sur lequel se déplace le véhicule, ces moyens permettant de mettre en oeuvre le procédé de l'invention,

- la figure 2 est un chronogramme qui permet de mieux comprendre l'entrelacement des signaux d'émission-réception échangés entre chacun des véhicules sous surveillance et la station centrale au cours de la mise en oeuvre du procédé de l'invention.

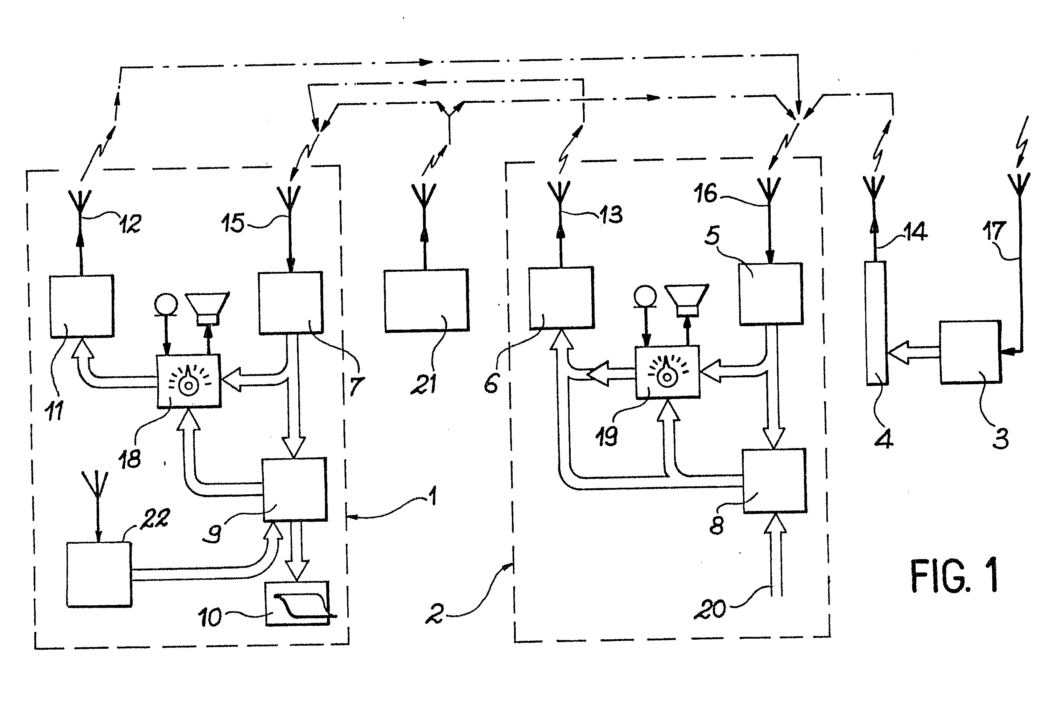

La figure 1 représente schématiquement les principaux moyens qui permettent de mettre en oeuvre le procédé de l'invention ; ces moyens sont installés à bord de chaque véhicule, dans la station centrale, ainsi qu'en différents points du territoire sur lequel les véhicules se déplacent et doivent être surveillés. Le procédé consiste, dans une station centrale 1 d'émission-réception et de traitement, de repérer les positions ou coordonnées réelles et précises de chaque véhicule, en latitude et en longitude, ainsi que les instants auxquels le véhicule occupe ces positions. Cette position est obtenue par correction automatique des positions approximatives qu'occupe chaque véhicule ; les positions approximatives ainsi que leurs valeurs respectives de correction, sont fournies par des moyens 2 d'émission-réception et de traitement de signaux, embarqués à bord de chaque véhicule. Ces moyens embarqués d'émission-réception et de traitement permettent, comme on le verra plus loin en détail, de transmettre, pour chaque véhicule, vers la station centrale, des signaux correspondant aux coordonnées réelles du véhicule, obtenues à partir des signaux fournis par des stations du réseau oméga mondial. Les signaux représentant les valeurs de correction automatique des coordonnées, proviennent d'un récepteur de correction de position 3, situé à proximité de chaque balise fixe d'émission, d'un réseau de balises de radionavigation ; ces balises occupent des positions fixes de coordonnées, connues très précisément, en latitude et en longitude. Un récepteur 3 de correction, situé à proximité de chaque balise, reçoit les signaux émis par les stations du réseau oméga mondial et traite ces signaux pour calculer la position estimée de la balise, repérée à partir des émissions des stations du réseau oméga mondial. Le récepteur 3 de correction calcule les différences entre les phases approximatives et les phases réelles des signaux oméga. Les signaux de correction correspondants sont émis, sous forme codéé, sur l'onde porteuse des signaux émis par la balise, vers des moyens de réception 5, embarqués sur chaque véhicule. Des moyens embarqués d'émission 6 transmettent vers des moyens de réception 7 de la station centrale, des signaux codés correspondant aux coordonnées réelles du véhicule, obtenues grâce aux moyens de réception embarqués 5. La station centrale comprend elle aussi des moyens de traitement 9. Les moyens de traitement embarqués 8 reliés aux moyens de réception embarqués 5 permettent aussi de décoder les signaux reçus des récepteurs 3 de traitement reliés aux balises émettrices 4, de coder les signaux transmis à l'émetteur embarqué 6 (positions corrigées des véhicules en longitude et latitude). Dans la station centrale, les moyens de traitement 9, reliés aux moyens de réception 7 de la station centrale 1, permettent notamment de décoder les signaux provenant des moyens d'émission embarqués 6. Ces moyens de traitement présentent des sorties qui peuvent être reliées

B 8081.3 DC

par exemple à une imprimante 10 permettant de visualiser au cours du temps, les déplacements des véhicules. La station centrale 1 comprend en outre des moyens d'émission 11 dont le rôle sera précisé plus loin en détail. Sur cette figure on a désigné par 12, 13, 14 les antennes reliées respectivement aux moyens d'émission 11 de la station centrale, aux moyens d'émission 6 embarqués, et à chaque balise émettrice 4.

On a désigné par 15, 16, 17 les antennes de réception reliées respectivement aux moyens de réception 7 de la station centrale, aux moyens de réception 5 embarqués, et aux moyens de réception et de traitement 3 reliés aux balises 4.

Les moyens de réception 7, et d'émission 11, de la station centrale, sont reliés à un système de communication phonique bilatérale 18. De la même manière, les moyens embarqués d'émission-réception 5, 6, sont eux aussi reliés à un moyen de communication phonique bilatérale 19. Ces moyens de communication phonique permettent, dans des conditions qui seront décrites plus loin en détail, d'établir des communications phoniques entre chaque véhicule et la station centrale, pendant des périodes prédéterminées et sur des fréquences prédéterminées.

Le réseau oméga mondial est un système mondial de radionavigation permettant aux navires et aux avions par exemple, de se repérer grâce aux mesures de phase de signaux émis par huit stations réparties autour du globe terrestre. Ce réseau répond parfaitement aux critères que les experts internationaux réclament, notamment pour le repérage mondial des véhicules maritimes et aériens. La précision de ce repérage n'est cependant pas parfaite puisqu'elle est de l'ordre de 5 miles nautiques. On voit aisément que ce système de repérage est insuffisant pour des véhicules terrestres

0156704

transportant des matières dangereuses ou précieuses, qui doivent être repérés avec beaucoup plus de précision. Comme dans tout système à mesure de phase, la combinaison des signaux provenant des stations émettrices du réseau oméga mondial, détermine des familles d'hyperboles qui permettent à un navigateur de se positionner à partir de cartes spéciales. Les récepteurs automatiques affichent directement la position en latitude et longitude avec l'imprécision indiquée plus haut. Cette imprécision est essentiellement due aux perturbations dans la propagation des signaux de repérage émis par les stations émettrices du réseau oméga mondial, à très basse fréquence. Ces perturbations sont dues essentiellement à la conductivité du sol (terre, mer ou glace), à la hauteur de la couche ionisée de l'atmosphère, aux effets des rayonnements solaires, etc... De ces perturbations il en résulte des temps réels de parcours des ondes, très différents de ceux qui correspondent normalement aux distances qui séparent un récepteur des stations émettrices. On voit qu'il est nécessaire d'apporter des corrections aux valeurs des longitudes et latitudes obtenues par la réception des signaux du réseau oméga mondial. Ces corrections peuvent être effectuées soit à l'aide de tables spéciales précalculées, qui sont longues à utiliser et qui ne permettent pas un repérage en temps réel, soit par l'utilisation d'un procédé complexe qui consiste à déterminer la correction la plus probable, à partir d'un traitement effectué sur des mesures provenant des trois fréquences oméga mondial (10,2 kHz, 13,6 kHz, 11,33 kHz). Les coordonnées d'un point à partir du réseau oméga mondial sont obtenues par traitement des phases des signaux provenant des stations de ce réseau. A cause des perturbations mentionnées plus haut, les phases obtenues sont approximatives, et

B 8081.3 DC

les coordonnées du point sont elles aussi par conséquent, approximatives.

Le procédé de l'invention permet d'effectuer ces corrections en temps réel, grâce à des moyens de réception et de traitement situés à proximité de balises de radionavigation, localisées sur le territoire où se déplacent les véhicules à surveiller. Ces balises de radionavigation permettent normalement aux navires de se repérer par radiogoniométrie. Elles sont situées en France, à proximité des côtes. Elles émettent des signaux dans la gamme de fréquence s'étendant de 285 à 425 kHz. Afin d'améliorer la couverture du territoire français par ces balises, une balise terrestre a été équipée des moyens de correction mentionnés plus haut.

Les récepteurs de correction reliés à chaque balise, reçoivent les signaux du réseau oméga mondial et observent les différences entre les phases réelles et les phases approximatives de ces signaux. Il est alors possible grâce aux moyens de traitement de ces récepteurs, de calculer les corrections à apporter aux localisations approximatives des véhicules, obtenues par le traitement des signaux du réseau oméga mondial. Ces signaux codés de correction indiquant à chaque instant les erreurs de positionnement (coordonnées en latitude et longitude) obtenues sur un territoire donné couvert par les balises, permettent à tout véhicule repérant sa position sur les signaux du réseau oméga mondial, de trouver sa position réelle ou corrigée. Ces signaux codés de correction sont comme indiqué plus haut, émis sur l'onde porteuse des signaux de balises, en direction des moyens de réception 5 de chaque véhicule.

Les moyens de réception 5 embarqués reçoivent ces signaux, corrigent la position approximative pour obtenir la position corrigée ou réelle (coordonnées en latitude et longitude) et, après un transcodage éventuel par les moyens de traitement 8, transmettent aux moyens d'émission 6, des signaux représentatifs de cette position réelle. Les moyens de réception 5 reçoivent également des signaux fournis par une horloge émettrice de précision 21. Cette horloge permet notamment de synchroniser les moyens d'émission et de réception embarqués, ainsi que les moyens d'émission et de réception de la station de surveillance. Elle permet aussi de connaître avec précision l'instant où chaque véhicule a émis des signaux codés. Elle synchronise une horloge de bord du véhicule (non représentée). Elle permet enfin, comme on le verra plus loin en détail, de déterminer entre les différents véhicules, des périodes entrelacées de signaux d'émission et de réception. Les moyens embarqués de traitement 8 permettent également de coder des signaux reçus sur des entrées 20 et qui peuvent représenter par exemple, le numéro d'identification de chaque véhicule ainsi que des alarmes survenant à bord de ce véhicule. Ces alarmes peuvent être un arrêt anormal du véhicule, l'absence de numéro d'identification par suite de la non introduction d'une clef de sécurité dans un système d'alarme de bord, le décrochage éventuel d'une remorque reliée à ce véhicule, etc... Ces signaux codés d'identification et d'alarmes sont transmis aux moyens 5, 6 embarqués d'émission-réception, pour être émis vers les moyens de réception 7 de la station centrale 1. Les moyens 18, 19 permettant d'établir des communications phoniques bilatérales entre chaque véhicule et la station centrale sont commandés par les moyens de traitement respectifs 8, 9 en fonction des fréquences prédéterminées d'émission et de réception phoniques bilatérales choisies pour chaque véhicule. Ces communications phoniques bilatérales peuvent être établies après chaque séquence de signaux émis par les véhicules vers la station centrale. Comme les périodes de transmission de ces signaux sont entrelacées pour les différents véhicules, il est évidemment nécessaire que les moyens de traitement 9 et de la station centrale et des véhicules, synchronisés par les signaux de l'horloge 21, interviennent pour indiquer les périodes possibles de communication phonique, d'une façon qui sera décrite plus loin en détail. Chaque véhicule transmet aussi à chaque instant et à partir d'indications fournies par le compteur kilométrique de bord de chaque véhicule la distance parcourue par rapport au point de départ du véhicule.

La station centrale comprend elle aussi un récepteur de correction 22, analogue à celui qui existe à proximité de chaque balise, pour effectuer les corrections mentionnées plus haut, en cas de panne d'un récepteur de correction proche d'une balise. Une alarme peut intervenir lorsqu'une telle panne se produit.

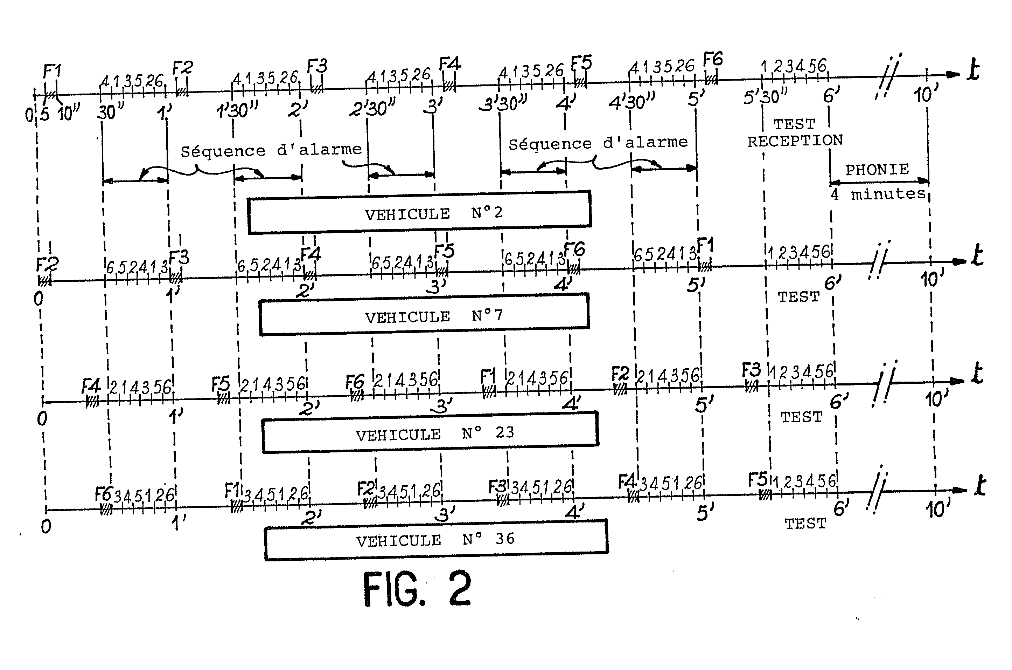

La figure 2 est un chronogramme des signaux transmis par les différents véhicules vers la station centrale. On a supposé sur ce chronogramme que la station centrale doit surveiller 36 véhicules. Ce chronogramme s'étend, pour chaque véhicule, par exemple sur un temps t de 10 min, on suppose que les véhicules sous surveillance sont les véhicules n°2, n°7, n°23 et n°36. Si l'on considère par exemple le véhicule n°2 sous surveillance, les références F1, F2, F3, F4, F5, F6, désignent les fréquences auxquelles sont transmis les signaux indiquant les positions de ce véhicule, obtenues à partir du réseau oméga mondial, le numéro d'identification du véhicule, les kilomètres parcourus et les différentes alarmes. Pour ce véhicule, les

signaux de fréquence F1, F2, ..., F6, sont émis vers les moyens de réception de la station centrale respectivement entre les instants 5 secondes et 10 secondes, une minute cinq secondes, 1 minute 10 secondes, ... 5 minutes 5 secondes et 5 minutes 10 secondes. Des séquences d'alarme éventuelles sont ensuite transmises respectivement entre les instants 30 secondes et 1 minute, 1 minute 30 secondes et 2 minutes, ... 4 minutes 30 secondes et 5 minutes. Enfin, une séquence de tests des moyens de réception du véhicule peut être transmise entre les instants 5 minutes 30 secondes et 6 minutes. Pour ce véhicule, ainsi que pour tous les autres véhicules, une période de communication phonique bilatérale avec la station centrale, d'une durée de 4 minutes par exemple, est prévue entre les instants 6 minutes et 10 minutes. La station centrale indique au véhicule considéré, grâce à ses moyens d'émission 11, sur quelle fréquence la communication phonique bilatérale peut être établie. Dans les séquences d'alarmes, les nombres 4, 1, 3, 5, 2, 6 désignent l'ordre des fréquences.

Comme indiqué plus haut, les moyens d'émission embarqués 6, commandés par les moyens de traitement 8, synchronisés par l'horloge 21, émettent des séquences de signaux de période entrelacée. C'est ainsi par exemple que le véhicule n°7, émet successivement les signaux de positionnement sur les fréquences successives F2, F3, F4, F5, F6, F1. Ces signaux sont émis respectivement entre les instants 0 et 5 secondes, 1 minute et 1 minute 5 secondes, ..., 5 minutes et 5 minutes 5 secondes. Les séquences d'alarmes quant à elles, sont émises aux mêmes instants que pour le véhicule n°2, mais avec un code différent qui est ici 652413 par exemple. La séquence de test est elle aussi émise aux mêmes instants que pour le véhicule n°2. La

B 8081.3 DC

période de communication phonique intervient elle aussi entre les mêmes instants que pour le véhicule n°2. On ne décrira pas de façon plus détaillée les signaux émis par les deux autres véhicules qui portent les numéros 23 et 36 par exemple. On remarquera simplement l'entrelacement des périodes d'émission des signaux de positionnement et de repérage temporel émis par ces véhicules.

Le procédé de l'invention permet bien d'obtenir les buts mentionnés plus haut : les positionnements rigoureux des véhicules par corrections des positions instantanées approximatives de chaque véhicule, la transmission de séquences d'alarmes, ainsi que la possibilité de communications phoniques bilatérales.

13

REVENDICATIONS

1. Procédé de surveillance des déplacements de véhicules à partir d'une station centrale (1) d'émission-réception et de traitement, consistant à repérer les coordonnées réelles de chaque véhicule, en latitude et longitude, ainsi que les instants auxquels chaque véhicule occupe ces coordonnées, ces coordonnées réelles étant obtenues par correction automatique des coordonnées approximatives des véhicules, fournies par des moyens (5) embarqués sur chaque véhicule, pour la réception et le traitement de signaux de repérage émis par des stations du réseau oméga mondial, des moyens d'émission embarqués (6) émettant vers la station centrale (1), des signaux correspondant aux coordonnées réelles, la correction automatique des coordonnées étant effectuée à partir de signaux fournis par des récepteurs (3) de correction, situés à proximité de balises fixes (4) d'émission de radionavigation, occupant des positions fixes de coordonnées connues en latitude et longitude, le récepteur de correction (3) à proximité de chaque balise recevant les signaux émis par les stations du réseau oméga mondial et traitant ces signaux pour calculer les différences entre les phases réelles et les phases approximatives des signaux oméga mondial reçus en cette position de coordonnées connues, ces différences étant émises sous forme de signaux codés de correction, sur l'onde porteuse émise par la balise, vers les moyens embarqués (5) de réception de chaque véhicule, les moyens embarqués (6) d'émission correspondants transmettant à la station centrale (1), les signaux de coordonnées réelles des véhicules, des moyens de réception (7) et de traitement (9) de la station centrale (1) fournissant les coordonnées réelles de véhicules à ces instants.

caractérisé en ce que l'instant correspondant à chaque position de véhicule est fourni par une horloge émettrice (21) de précision, captée par les moyens embarqués de réception, cette horloge synchronisant les moyens d'émission (6) et de réception (5) embarqués des véhicules, les moyens d'émission embarqués (6) émettant des séquences de signaux présentant pour les différents véhicules, des périodes entrelacées.

2. Procédé selon la revendication 1, caractérisé en ce qu'il consiste en outre, grâce aux moyens d'émission-réception embarqués (5, 6) sur chaque véhicule, à émettre vers la station centrale (1), des signaux codés indiquant un numéro d'identification du véhicule.

3. Procédé de surveillance selon la revendication 2, caractérisé en ce qu'après chaque séquence de signaux, pour chaque véhicule, est prévue une période de communication bilatérale en phonie entre le véhicule et la station centrale (1), et réciproquement.

4. Procédé selon la revendication 1, caractérisé en ce qu'il consiste, grâce aux moyens d'émission-réception embarqués (5, 6) sur chaque véhicule, à émettre vers la station centrale (1), des signaux codés indiquant des alarmes éventuelles à bord du véhicule.

5. Procédé selon la revendication 1, caractérisé en ce qu'il consiste, grâce aux moyens d'émission-réception embarqués (5, 6) sur chaque véhicule à émettre vers la station centrale, des signaux codés indiquant la distance parcourue par le véhicule depuis son départ.

6. Procédé selon la revendication 4, caractérisé en ce que lesdites corrections sont effectuées dans la station centrale qui comprend en outre un récepteur (22) de correction pour effectuer lesdites corrections en cas de panne du récepteur de correction situé à proximité d'une balise, une alarme étant prévue pour indiquer cette panne.

FIG. 1

1/2

0156704

FIG. 2

## DOCUMENTS CONSIDERES COMME PERTINENTS

| Catégorie | Citation du document avec indication. en cas de besoin, des parties pertinentes | Revendication concernée | CLASSEMENT DE LA DEMANDE (Int Cl.4) |
|---|---|---|---|
| A | DE-A-2 853 317 (LICENTIA PATENT-VERWALTUNGS-GmbH) * Page 3, lignes 1-17; page 4, lignes 6-22; page 7, lignes 4-7; page 7, ligne 24 - page 8, ligne 14 * | 1,6 | G 01 S 5/10 G 01 S 1/30 |
| A | US-A-3 774 211 (G. NARD et al.) * Colonne 1, ligne 41 - colonne 2, ligne 68 * | 1,6 | |
| A | WESCON TECHNICAL PAPERS, vol. 20, 1976, pages 1-7, section 33/3, Hollywood, US; J. VAN DEWERKER: "LORAN vehicle location systems" * Pages 6,7, le paragraphe: "Communications" * | 1 | |
| A | US-A-3 774 215 (R.R. REED) * Colonne 2, ligne 54 - colonne 4, ligne 11 * | 1,2,3 | **DOMAINES TECHNIQUES RECHERCHES (Int. Cl.4)** G 01 S |
| A | US-A-3 711 856 (D.J. ADRIAN et al.) * Colonne 1, ligne 55 - colonne 2, ligne 55 * | 1,3 | |
| | --- -/- | | |

Le présent rapport de recherche a été établi pour toutes les revendications

| Lieu de la recherche | Date d'achèvement de la recherche | Examinateur |
|---|---|---|
| LA HAYE | 18-06-1985 | MARCHAU M.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

## DOCUMENTS CONSIDERES COMME PERTINENTS

| Catégorie | Citation du document avec indication en cas de besoin des parties pertinentes | Revendication concernée | CLASSEMENT DE LA DEMANDE (Int Cl 4) |
|---|---|---|---|
| A | IEEE TRANSACTIONS ON VEHICULAR TECHNOLOGY, vol. VT-26, no. 2, mai 1977, pages 188-189, New York, US; D.J. SYMES: "Multiuser area-coverage automatic vehicle monitoring program" * Page 187, paragraphe: "AVM system operation"; pages 188-189, paragraphes: "RF multilateration" et "Dead reckoning" * | 1,3,4, 5 | |

-----

DOMAINES TECHNIQUES
RECHERCHES (Int. Cl.4)

Le présent rapport de recherche a été établi pour toutes les revendications

| Lieu de la recherche | Date d achevement de la recherche | Examinateur |
|---|---|---|
| LA HAYE | 18-06-1985 | MARCHAU M.F. |